# EUROPEAN PATENT APPLICATION

(11) **EP 4 542 761 A1**
(43) Date of publication of application: **23.04.2025**
(21) Application number: 24819513.3
(22) Date of filing: 21.05.2024
(51) Int. Cl.: H01M 50/583, H01M 50/588, H01M 10/052

(54) **ELECTRODE TAB FOR SECONDARY BATTERY, ELECTRODE ASSEMBLY, SECONDARY BATTERY, BATTERY PACK, AND TRANSPORTATION MEANS**

(30) Priority: 09.06.2023 KR 20230073927
(71) Applicant: LG Energy Solution, Ltd., Seoul 07335 (KR)
(72) Inventor: LEE, Hana, Daejeon 34122 (KR)
(74) Representative: Goddar, Heinz J.
(86) International application number: PCT/KR2024/006842
(87) International publication number: WO 2024/253361

(57) **Abstract**

The present invention relates to an electrode tab for a secondary battery, the electrode tab including: a first member and a second member having different resistances, the second member being located in at least a portion of the electrode tab and having a resistance greater than that of the first member; and a cutoff part configured to be melted by its own resistance heat to interrupt current when an overcurrent of 10 A or higher flows.

## Description

### [Technical Field]

The present application claims priority to and the benefit of Korean Patent Application No. 10-2023-0073927 filed in the Korean Intellectual Property Office on June 9, 2023, the entire contents of which are incorporated herein by reference.

The present invention relates to an electrode tab for a secondary battery, an electrode assembly including the electrode tab, a secondary battery, a battery pack, and a moving means.

### [Background Art]

In general, a secondary battery refers to a battery that is chargeable and dischargeable unlike a primary battery that is not chargeable, and the secondary battery is widely used in the field of high-tech electronic devices such as a phone, a laptop computer, and a camcorder.

Depending on a shape of a battery case, the secondary battery is classified into a cylindrical battery and a prismatic battery in which an electrode assembly is embedded in a cylindrical or prismatic metal battery case, and a pouch-type battery in which an electrode assembly is embedded in a pouch-type battery case made of an aluminum laminate sheet.

In general, materials used in a secondary battery (for example, positive and negative electrode active materials, a binder, an electrolyte solution, a current collector, and the like) are electrochemically stable at a voltage (2.5V to 4.3V) at which the battery operates. However, when a voltage of the battery is raised to a voltage higher than the operating voltage, the constituent materials are decomposed while generating gas at respective decomposition voltages. The gas generated in this way increases a pressure inside the lithium secondary battery, and as a result, the voltage continues to increase. At this time, if there is a fine short-circuit or the lithium metal electrodeposited on a surface of the negative electrode penetrates a separator and comes into contact with the positive electrode, a large amount of current flows through the corresponding portion, promoting the generation of heat and gas. Such heat and gas are released to the outside through a vulnerable portion of the battery, eventually causing the battery to ignite or explode.

The cylindrical secondary battery can prevent ignition or explosion of the secondary battery by forming a notch in a current interruptive device (CID) and a safety vent included in a cap assembly so that heat and gas can be discharged to the outside by rupturing the CID and safety vent.

However, the rupture of the CID and safety vent is caused by the progression of gas generation inside the secondary battery. Therefore, if the reaction progresses quickly, such as thermal runaway, the secondary battery may ignite or explode before the CID and safety vent are ruptured.

### [Detailed Description of the Invention]

### [Technical Problem]

In view of the above-described situations of the related art, the present invention has been made in an effort to provide an electrode tab for a secondary battery that can prevent ignition and explosion of the secondary battery by interrupting current using heat generated by a large amount of current.

### [Technical Solution]

An exemplary embodiment of the present invention provides an electrode tab for a secondary battery, the electrode tab including: a first member and a second member having different resistances, the second member being located in at least a portion of the electrode tab and having a resistance greater than that of the first member; and a cutoff part configured to be melted by its own resistance heat to interrupt current when an overcurrent of 10 A or higher flows.

An exemplary embodiment of the present invention provides an electrode assembly including the electrode tab.

An exemplary embodiment of the present invention provides a secondary battery including the electrode assembly.

An exemplary embodiment of the present invention provides a battery pack including the secondary battery.

An exemplary embodiment of the present invention provides a moving means including the battery pack.

### [Advantageous Effects]

The electrode tab for a secondary battery according to an exemplary embodiment of the present invention generally contains a material with a higher resistance than nickel, a nickel alloy, or aluminum that typically constitutes an electrode tab, so that when a large amount of current flows through the electrode tab, the electrode tab is cut due to the material with higher resistance to interrupt the current, thereby improving the safety of the secondary battery.

### [Brief Description of Drawings]

FIG. 1 is a front view of the electrode tab according to an exemplary embodiment of the present invention.
FIG. 2 is a front view and a side view of an electrode tab according to an exemplary embodiment of the present invention, in which (a) shows an electrode tab according to an exemplary embodiment, (b) shows an electrode tab according to another exemplary embodiment, (c) shows an electrode tab according to still another exemplary embodiment, and (d) shows an electrode tab according to yet another exemplary embodiment.
FIG. 3 is a cross-sectional view of a secondary battery including an electrode tab according to an exemplary embodiment of the present invention.
FIG. 4 is a perspective view showing a battery pack including a secondary battery according to an exemplary embodiment of the present invention.
FIG. 5 is a perspective view showing a moving means including a battery pack according to an exemplary embodiment of the present invention.

### <Explanation of Reference Numerals and Symbols>

1: secondary battery
2: pack housing
3: battery pack
100: electrode assembly
10: electrode tab
11: cutoff part
11a: first cutoff part
11b: second cutoff part
12: non-cutoff part
200: battery case
210: beading portion
220: crimping portion
300: cap assembly
310: top cap
320: safety vent
330: current interruptive device
340: sealing gasket
350: CID gasket
V: moving means
C: core part

### [Best Mode]

The detailed description of the present invention is intended to completely explain the present invention to one skilled in the art. Throughout the specification, unless explicitly described to the contrary, when one component "comprises (includes)" another component or "is characterized by" having a certain structure and a certain shape, this means that other components, structures, and shapes may be included without being excluded.

The present invention may be variously modified and may have various exemplary embodiments, and specific exemplary embodiments will be described in detail in the detailed description. However, the description of the exemplary embodiments is not intended to limit the contents of the present invention, but it should be understood that the present invention is to cover all modifications, equivalents and alternatives falling within the spirit and technical scope of the present invention.

Hereinafter, the present invention will be described in detail with reference to the drawings. However, it should be noted that the drawings are provided for illustrating the present invention, and the scope of the present invention is not limited by the drawings.

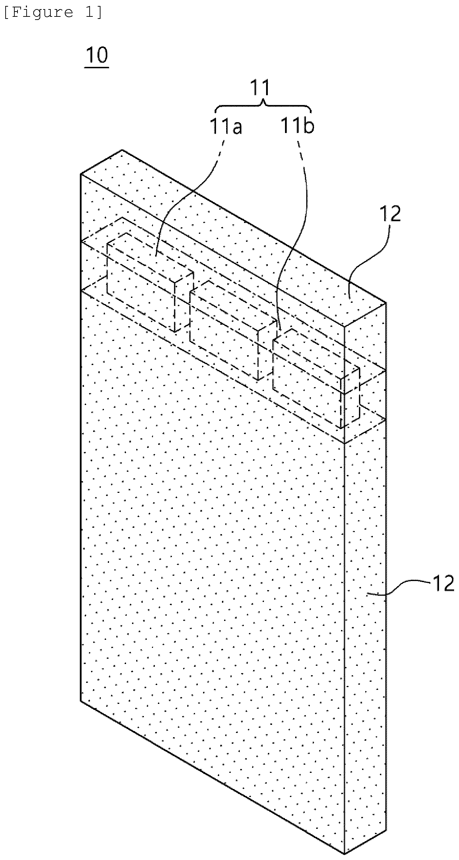

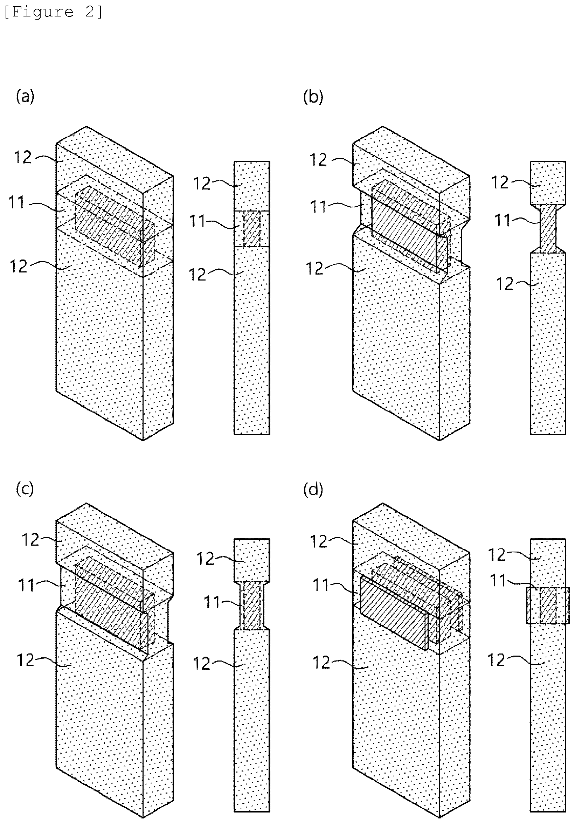

FIG. 1 is a front view of an electrode tab according to an exemplary embodiment of the present invention, and FIG. 2 is a front view and a side view of an electrode tab according to an exemplary embodiment of the present invention. In FIG. 2, (a) shows an electrode tab according to an exemplary embodiment, (b) shows an electrode tab according to another exemplary embodiment, (c) shows an electrode tab according to still another exemplary embodiment, and (d) shows an electrode tab according to yet another exemplary embodiment.

The electrode tab 10 according to the present invention includes a first member and a second member. The first member has a lower resistance than that of the second member. In other words, the second member has a greater resistance than that of the first member. Therefore, when a local short circuit occurs in a positive electrode or negative electrode of an electrode assembly including the electrode tab 10 according to an exemplary embodiment of the present invention, the positive electrode and the negative electrode come into contact with each other and a large amount of current flows through the contact portion, the large amount of current causes the first member or second member to cut.

The second member may include a metal with a greater resistance than that of the first member or a non-conductor. For example, the first member may include nickel, a nickel alloy, or aluminum. Preferably, the first member may include nickel or a nickel-copper alloy, and more preferably, nickel.

The second member may include a metal with a greater resistance than that of the first member, that is, a high-resistance material, or a non-conductor. The high-resistance material may include any one of lead, tin, zinc, copper, and iron, and the non-conductor may include plastic or rubber.

In an exemplary embodiment, in the case where the second member is made of a high-resistance material, when a temperature rises due to overcurrent, a temperature of the electrode tab 10 according to an exemplary embodiment of the present invention is raised faster than an internal temperature of the battery due to the resistance heat of the second member itself and reaches a melting point, so that the electrode tab may be melted before the battery is exploded or ignited due to the internal temperature rise of the battery.

In other words, in the electrode tab 10 according to an exemplary embodiment of the present invention, the second member is melted, so that a cross-sectional area of the electrode tab 10 through which the current flows is reduced from the first member and the second member to the first member. Accordingly, the resistance of the first member increases, so that the first member is melted due to its own resistance heat and the resistance heat of the second member, thereby cutting off the electrode tab 10 and interrupting the current in the electrode tab 10.

In another exemplary embodiment, in the case where the second member is made of a non-conductor, current flows only through the first member of the electrode tab 10 according to an exemplary embodiment of the present invention, so that when overcurrent flows through the electrode tab 10, resistance and resistance heat are increased in the first member. As a result, the first member may be melted to interrupt the current in the electrode tab 10.

Therefore, the electrode tab 10 according to an exemplary embodiment of the present invention is cut off before the internal pressure of the secondary battery causes physical deformation in the CID or safety vent due to heat and gas, thereby interrupting the flow of current, which increases the safety of the secondary battery.

Referring to (a), (c), and (d) of FIG. 2, the second member is located inside a portion of the electrode tab 10. In other words, most of the electrode tab 10 may be made of the first member, and the second member may be located in a portion of the electrode tab. Therefore, the second member may be surrounded by the first member, and the second member may not be exposed to the outside.

The electrode tab 10 may include a cutoff part 11 that is melted by its own resistance heat to interrupt current when an overcurrent of 10 A or higher flows. The electrode tab 10 may include a non-cutoff part 12, which is a part other than the cutoff part 11.

Since the second member is located inside the electrode tab 10, the cutoff part 11 of the electrode tab 10 may include a structure in which the cutoff part 11 includes a first member and a second member, and the first member is located on both surfaces of the second member.

The cutoff part 11 may include one or two or more second members. The cutoff part 11 may be provided in a width direction of the electrode tab 10. In this case, the width direction of the electrode tab 10 refers to a direction of a length between both facing ends in a direction horizontal to a diameter of the electrode assembly.

When the cutoff part 11 includes one second member, for example, the second member may be included in a long rectangular shape in the width direction of the electrode tab 10. A width of the second member may be narrower than a width of the electrode tab 10, and therefore, the cutoff part 11 may include a portion where only the first member is provided without including the second member.

When a large amount of current flows through the electrode assembly, the part where only the first member is provided may be cut off by receiving heat from a part where the second member 11 is included or may be easily cut off by pressure due to the gas generated inside the secondary battery. Therefore, the safety can be ensured before pressure sufficient to physically deform the secondary battery case, the CID, and the safety vent is reached.

When the cutoff part 11 includes two or more second members, the second members may be located spaced apart from each other. For example, the cutoff part 11 may include a plurality of first cutoff parts 11a formed of a second member and a second cutoff part 11b in which only a first member is located between the first cutoff parts 11a, and a length of the first cutoff part 11a and a length of the second cutoff part 11b may be the same, and a width ratio may be 1:2 to 1:4.

Referring to (b) and (c) of FIG. 2, thicknesses of the cutoff part 11 and the non-cutoff part 12 of the electrode tab 10 may be different. For example, the cutoff part 11 may have a thickness of 10% to 90% of a thickness of the non-cutoff part 12. Preferably, the cutoff part 11 may have a thickness of 20% to 90%, and more preferably 30% to 80% of the thickness of the non-cutoff part 12.

In (c) of FIG. 2, a thickness of the first member of the cutoff part 11 is thin, so that an overall thickness of the cutoff part 11 is smaller than the non-cutoff part 12. However, in the electrode tab 10 according to an exemplary embodiment of the present invention, a thickness of the second member of the cutoff part 11 may be thin, thereby reducing the overall thickness of the cutoff part 11.

In addition, since the thickness of the cutoff part 11 is smaller than the thickness of the non-cutoff part 12, the resistance of the cutoff part 11 increases, which may facilitate melting and cutoff of the cutoff part 11 when an overcurrent flows through the electrode tab 10, thereby facilitating current interruption of the electrode tab 10.

The electrode tab 10 may include a first cutoff part 11a, a second cutoff part 11b, and a non-cutoff part 12.

For example, when the second cutoff part 11b includes a second member made of a high-resistance material, the second cutoff part 11b is melted and cut off by resistance heat, and after the second cutoff part 11b is cut off, the first cutoff part 11a is melted by its own resistance heat and the resistance heat of the second cutoff part 11b, resulting in cutoff of the electrode tab 10.

Alternatively, when the second cutoff part 11b includes a second member made of a non-conductor, the first cutoff part 11a is melted and cut off by resistance heat, resulting in current interruption of the electrode tab 10.

The first cutoff part 11a may include only the second member, or may include the first member and the second member.

Referring to (b) of FIG. 2, when the first cutoff part 11a is formed only of a second member, the thickness of the second member may be 10% to 90% of the thickness of the non-cutoff part 12. In this case, the second member of the electrode tab 10 for a secondary battery according to an exemplary embodiment of the present invention may be exposed to the first cutoff part 11a.

Referring to (c) of FIG. 2, when the first cutoff part 11a is formed of a first member and a second member, the first member may be provided in the form of being located on both surfaces of the second member. A combined thickness of the second member and the first member located on both surfaces of the second member may be 10% to 100% of the thickness of the non-cutoff part 12. Preferably, the combined thickness of the second member and the first member located on both surfaces of the second member may be 10% to 90% of the thickness of the non-cutoff part 12.

In this case, the first member may be thinner than the second member, and the second member is not exposed to the outside. For example, if the thickness of the non-cutoff part 12 is 50 µm to 300 µm, the thickness of the second member may be 40 µm to 250 µm, and the thickness of the first member located on one surface of the second member may be 10 µm to 50 µm.

Referring to (d) of FIG. 2, the electrode tab 10 may have a second member further stacked at a position corresponding to the second member. That is, the electrode tab 10 may have one or more second members stacked or coated on one surface or both surfaces. The position of the second member to be stacked or coated may be the same as that of the second member located inside the electrode tab 10.

In other words, the electrode tab 10 may include a cutoff part 11 that is melted by its own resistance heat to interrupt current when an overcurrent of 10 A or higher flows. The electrode tab 10 may include a cutoff part 11 and a non-cutoff part 12. That is, the electrode tab 10 may include a first cutoff part 11a, a second cutoff part 11b, and a non-cutoff part 12. The first cutoff part 11a may be formed of a first member and a second member, and a side end portion of the first cutoff part 11a may be provided in a structure in which the first member is located between the second members.

The first cutoff part 11a of the electrode tab 10 includes an internal second member located inside the electrode tab 10, a first member surrounding the internal second member, and an external second member located on one surface of the first member corresponding to the internal second member. Therefore, the first cutoff part 11a may be formed to be thicker than the thickness of the non-cutoff part 12 or the second cutoff part 11b.

Since the second members are located inside and outside the first cutoff part 11a, when overcurrent flows through the secondary battery, the first member can easily reach the melting point due to the resistance heat of the second members located on both surfaces of the first member. In addition, by heating the first member on both surfaces of the first member, it is easy to interrupt the current before the internal temperature of the battery rises and causes battery explosion or ignition.

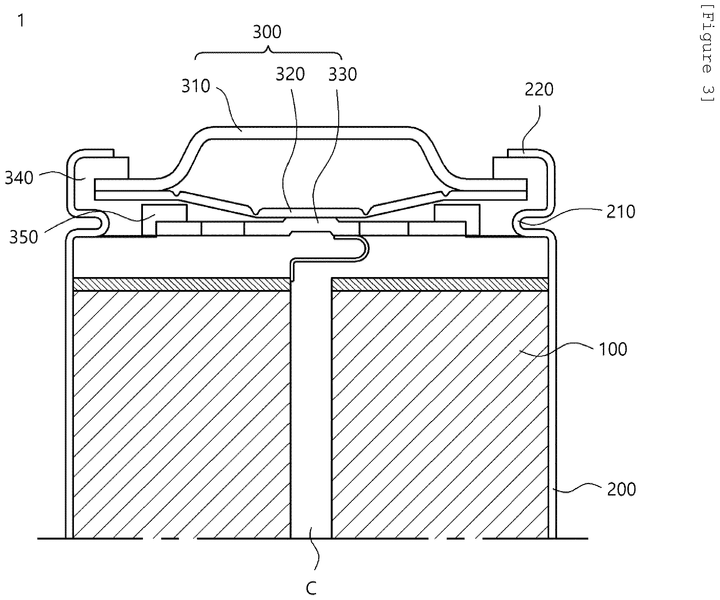

FIG. 3 is a cross-sectional view of a secondary battery including an electrode tab according to an exemplary embodiment of the present invention. A secondary battery 1 includes an electrode assembly 100, a battery case 200, and a cap assembly 300.

The electrode assembly 100 is a power generating element that includes a positive electrode, a negative electrode, and a separator located between the positive electrode and the negative electrode and can be charged and discharged.

The electrode assembly 100 may include a jelly roll structure in which a first separator, a negative electrode, a second separator, and a positive electrode are sequentially stacked and wound.

The positive electrode may include a positive electrode current collector, a positive electrode active material portion, and a positive electrode uncoated portion. The positive electrode current collector is a metal thin plate with excellent conductivity and may include, for example, an aluminum (Al) foil.

The positive electrode is coated with a positive electrode active material on one or more of both surfaces of the positive electrode current collector. A region coated with the positive electrode active material is a positive electrode active material portion, and a region not coated with the positive electrode active material is a positive electrode uncoated portion. Since the positive electrode uncoated portion is not applied with the positive electrode active material layer, a first electrode tab can be joined thereto.

The positive electrode active material may include a lithium cobalt oxide with a high operating voltage and excellent capacity characteristics, a lithium nickel oxide with a high reversible capacity and used to easily implement a large-capacity battery, a lithium nickel cobalt oxide where a part of nickel is substituted with cobalt, a lithium nickel cobalt metal oxide where a part of nickel is substituted with manganese, cobalt, or aluminum, a lithium manganese-based oxide excellent in thermal stability and low in cost, a lithium iron phosphate excellent in stability, and the like.

The negative electrode may include a negative electrode collector, a negative electrode active material portion, and a negative electrode uncoated portion. The negative electrode current collector may include a metal thin plate with excellent conductivity, for example, a copper (Cu) or nickel (Ni) foil.

The negative electrode is coated with a negative electrode active material on one surface or both surfaces of the negative electrode current collector. The negative electrode active material portion is formed by coating or applying the negative electrode active material, and the negative electrode uncoated portion is a region where the negative electrode active material is not coated or applied and the negative electrode current collector is exposed. Since the negative electrode uncoated portion is not applied with the negative electrode active material, a second electrode tab can be joined thereto.

The negative electrode active material may be, for example, a carbon material such as crystalline carbon, amorphous carbon, carbon composite, or carbon fiber, lithium metal, a lithium alloy, or the like. In this case, the negative electrode active material may further include, for example, non-graphite-based SiO (silica), SiC (silicon carbide) or the like for high-capacity design.

The first electrode tab and the second electrode tab serve to transfer electrons collected in the current collectors to an external circuit, and may protrude in opposite directions with respect to the electrode assembly of the jelly-roll structure. The electrode tab according to an exemplary embodiment of the present invention includes one or more of the first electrode tab and the second electrode tab. That is, the first and second electrode tabs may include a first member and a second member having different resistances, and the second member may be located inside a portion of the electrode tab.

The separator prevents an internal short circuit that may be generated when the positive electrode and the negative electrode come into contact with each other, and may include a porous material to facilitate migration of ions between the electrodes.

In an exemplary embodiment, the separator may include a base material layer made of a porous material. The base material layer may include, for example, any one selected from the group consisting of polyethylene (PE), polystyrene (PS), polypropylene (PP), and a copolymer of polyethylene (PE) and polypropylene (PP).

In another exemplary embodiment, the separator may include a safety reinforced separator (SRS). That is, the separator may include a base material layer made of a porous material and a coating layer coated and formed on the base material layer by applying mixed slurry of inorganic particles and a binder polymer. Preferably, the coating layer includes ceramic particles and has a uniform pore structure formed by an interstitial volume between the ceramic particles that are a component of an active layer, in addition to a pore structure of the separator base material itself.

The coating layer may include ceramic particles including at least one selected from the group consisting of alumina, silica, TiO₂, SiC, and MgAl₂O₄. Such a coating layer is included, so that the safety of the electrode assembly can be enhanced. The coating layer may further include a lithium salt.

The battery case 200 may have a column structure with a space formed therein. The battery case 200 may accommodate the electrode assembly 100 including electrodes and a separator and an electrolyte solution (not shown) in the internal space. The battery case 200 may have a structure in which one side is open (hereinafter, referred to as an opening portion) and the other side is sealed. Here, one side and the other side of the battery case 200 refer to end portions positioned at an upper part and a lower part along a direction of gravity or a center axis of the battery case 200.

The opened upper side surface of the battery case 200 may be provided with a beading portion 210 folded toward the center of the secondary battery 1. The battery case 200 may be provided with a crimping portion 220 above the beading portion 210. That is, the crimping portion 220 may be positioned on the uppermost side of the battery case 200. Here, the upper part refers to a region from the center of the battery case 200 toward the opening portion.

The battery case 200 may be made of a lightweight conductive metal material such as aluminum or aluminum alloy.

The cap assembly 300 may be coupled to the opened surface of the battery case 200, and may include a top cap 310, a safety vent 320, and a current interruptive device 330.

The top cap 310 is positioned at the top of the cap assembly 300, and may protrude in an opposite direction to the center of the battery case 200. The top cap 310 may serve as an electrode terminal so that the protruding portion is electrically connected to the outside. For example, the top cap 310 may serve as a positive electrode terminal.

The top cap 310 may be coupled with a sealing gasket 340 at an edge of the top cap 310, and the sealing gasket 340 may be positioned inside the crimping portion 220 of the battery case 200. The sealing gasket 340 can increase a sealing force between the top cap 310 and the battery case 200.

The top cap 310 may include a protrusion protruding upward, a rim portion that contacts and is coupled to the sealing gasket 340, and a first connection portion connecting the protrusion and the rim portion.

The safety vent 320 is positioned below the top cap 310 and may be electrically connected to the top cap 310. At least a portion of a surface of the safety vent 320 facing the top cap 310 may be in contact with the top cap 310. The safety vent 320 is in contact with the top cap 310 for a certain length from its end portion, and a portion excluding the contact length may be located at a predetermined distance away from the top cap 310. The portion of the safety vent 320 in contact with the top cap 310 may be coupled with the sealing gasket 340.

A spacing distance between the safety vent 320 and the top cap 310 may increase from a region of the safety vent 320 in contact with the top cap 310 toward the center of the safety vent 320.

The safety vent 320 may include a contact portion in contact with the top cap 310, a central portion positioned at the center of the safety vent 320 and in contact with the current interruptive device, and a second connection portion connecting the contact portion and the central portion. The safety vent 320 may be provided with a bent portion (or notch) at a portion where the contact portion and the second connection portion and the second connection portion and the central portion are in contact.

In an exemplary embodiment, the safety vent 320 may have an end portion perpendicular to an axial direction of the battery case 200. In this case, the top cap 310 may be provided perpendicular to the axial direction of the battery case 200, like the safety vent 320. That is, the safety vent 320 and the top cap 310 can be positioned horizontally.

In another exemplary embodiment, the safety vent 320 may have an end portion bent to surround an outer circumferential surface of the top cap 310.

In the secondary battery 1 according to an exemplary embodiment of the present invention, gas is generated or heat is generated as the electrode assembly 100 accommodated inside the battery case 200 reacts with the electrolyte solution, thereby increasing an internal pressure.

When the internal pressure of the secondary battery 1 increases, the safety vent 320 receives force in a direction of the top cap 310, and the bent portion ruptures, causing the gas inside the secondary battery 1 to be discharged.

The current interruptive device (CID) 330 is positioned below the safety vent 320, and at least a portion thereof may be connected to the safety vent 320.

When the safety vent 320 ruptures as the internal pressure of the secondary battery 1 increases, the current interruptive device 330 is separated from the safety vent 320 to interrupt the current.

More specifically, the current interruptive device 330 may include a connection portion connected to the safety vent 320 at a central portion and protruding in a direction in which the safety vent 320 is positioned, an edge portion excluding the connection portion, and a coupling portion connecting the connection portion and the edge portion. The coupling portion is provided in plural, and the plurality of coupling portions may be positioned spaced apart from each other.

When the safety vent 320 is deformed in the direction in which the top cap 310 is positioned, the coupling portion may be disconnected and the connection portion may be separated from the edge portion. That is, the connection portion is separated in the direction of the top cap 310 while being connected to the safety vent 320.

A CID gasket 350 surrounds an edge of the current interruptive device 330 and can electrically separate the safety vent 320 from the edge portion and coupling portion other than the connection portion of the current interruptive device 330.

According to an exemplary embodiment of the present invention, a battery pack including any one of the secondary batteries described above is provided.

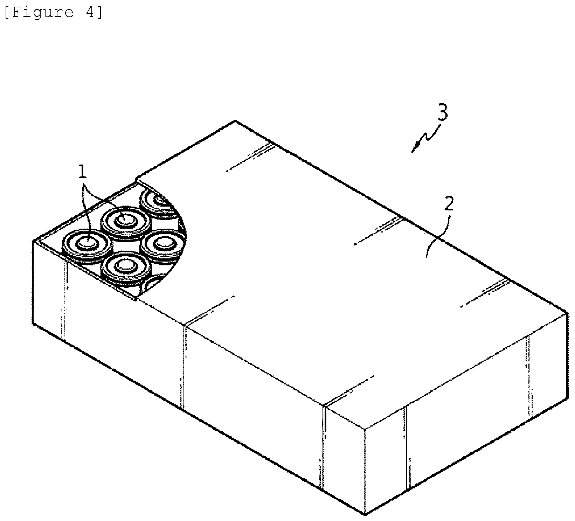

In relation to the above exemplary embodiment, referring referred to FIG. 4, a battery pack 3 including the secondary battery 1 in a pack housing 2 is shown.

The battery pack according to the above exemplary embodiment has high output/high capacity.

According to an exemplary embodiment of the present invention, a moving means including the battery pack described above is provided.

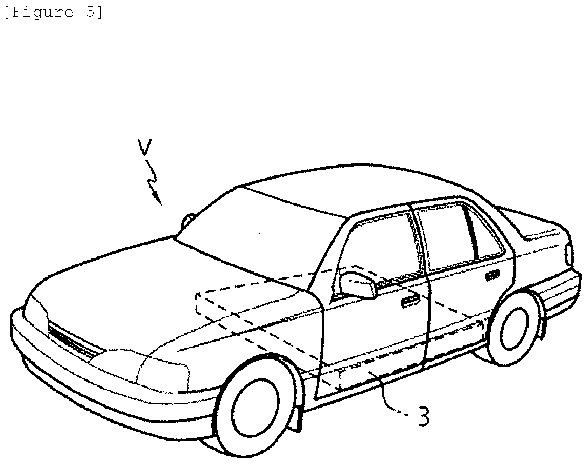

In relation to the above exemplary embodiment, referring referred to FIG. 5, a moving means V including the battery pack 3 is shown.

Since the moving means according to the above exemplary embodiment uses the battery pack having high output/high capacity, the moving means is excellent in terms of stability and safety.

Although the present invention has been described with reference to preferred exemplary embodiments, it will be understood by one skilled in the art that various modifications and variations can be made to the present invention without departing from the technical spirit and scope of the present invention.

## Claims

1. An electrode tab for a secondary battery, comprising:
a first member and a second member having different resistances, the second member being located in at least a portion of the electrode tab and having a resistance greater than that of the first member; and
a cutoff part configured to be melted by its own resistance heat to interrupt current when an overcurrent of 10 A or higher flows.

2. The electrode tab for a secondary battery of claim 1, wherein the cutoff part is configured by the first member, and the second member is located inside the first member.

3. The electrode tab for a secondary battery of claim 2, wherein the cutoff part comprises a first cutoff part that is a region where the second member is located and a second cutoff part that is a region where only the first member is included, and
wherein the cutoff part comprises one or two or more of the first cutoff parts.

4. The electrode tab for a secondary battery of claim 3, wherein the two or more first cutoff parts are located spaced apart from each other.

5. The electrode tab for a secondary battery of claim 3, wherein the first cutoff part is provided in a width direction of the electrode tab.

6. The electrode tab for a secondary battery of claim 1, wherein the electrode tab comprises a non-cutoff part that is not cut off even when the overcurrent of 10 A or higher flows, and
wherein the cutoff part has a thickness of 10% to 90% of a thickness of the non-cutoff part.

7. The electrode tab for a secondary battery of claim 6, wherein the cutoff part is configured by the first member, and the second member is located inside the first member.

8. The electrode tab for a secondary battery of claim 6, wherein the cutoff part comprises only the second member, and the non-cutoff part comprises only the first member.

9. The electrode tab for a secondary battery of claim 2, wherein the cutoff part comprises the second member further stacked on one surface of the first member.

10. An electrode assembly comprising the electrode tab of any one of claims 1 to 9.

11. A secondary battery comprising the electrode assembly of claim 10.

12. A battery pack comprising the secondary battery of claim 11.

13. A moving means comprising the battery pack of claim 12.
